# EUROPÄISCHE PATENTANMELDUNG

(11) **EP 1 103 751 A2**
(43) Veröffentlichungstag der Anmeldung: **30.05.2001**
(21) Anmeldenummer: 00250408.2
(22) Anmeldetag: 29.11.2000
(51) Int. Cl.: F16L 3/20

(54) **Kardanisch elastische Aufhängung**

(30) Priorität: 29.11.1999 DE 19957410
(71) Anmelder: WOCO Franz-Josef Wolf & Co., D-63628 Bad Soden-Salmünster (DE)
(72) Erfinder: Wolf, Franz Josef, 63628 Bad Soden-Salmünster (DE); Mohr, Martin, 63628 Bad Soden-Salmünster (DE); Noll, Alexander, 36396 Steinau 2 (DE); Kalkhof, Volker, 63571 Gelnhausen (DE)
(74) Vertreter: Jaeger, Klaus, Dipl.-Chem. Dr.

(57) **Zusammenfassung**

Die kardanisch elastische Aufhängung für ein schwingendes Bauteil an einem Träger, insbesondere eine Abgasanlagenaufhängung für Kraftfahrzeuge, mit einer Elastomerfeder zwischen einem Trägeranschlussstück und einem Lastanschlussstück für das Bauteil, ist gekennzeichnet durch eine anisotrope Einstellung der Federkenndaten in den drei Raumrichtungen.

## Beschreibung

Die Erfindung betrifft eine kardanisch elastische Aufhängung für schwingende Bauteile an Trägern, wie sie insbesondere für die Aufhängung von Abgasanlagen an Kraftfahrzeugen Verwendung finden. Solche kardanisch elastischen Aufhängungen sind typischerweise als Elastomerfederschlaufen ausgebildet, die mit einem Trägeranschlußstück und einem Lastanschlußstück für das schwingungsbeaufschlagte Bauteil versehen sind.

Eine Aufhängung der vorstehend beschriebenen Art ist beispielsweise aus der DE 42 07 683 A1 bekannt. In einer auf Zug belasteten Elastomerschlaufe ist auf deren lastaufnehmender Innensohle über ein dreidimensional translatorisch und kardanisch bewegliches und unter statischen Bedingungen auf Druck belastetes Elastomergelenk ausgebildet, an dem einteilig, also ebenfalls aus Elastomer bestehend, ein Lastanschlußstück angeformt ist, das mit einer durchgehenden Bohrung 14 zur Aufnahme eines Aufhängebügels einer Abgasanlage versehen ist. Bei dieser Bauweise wird zwar das kardanische elastische Gummigelenk unter Druck beaufschlagt, die Hauptlast der Abgasanlage nimmt dann aber die unter Zug belastete Elastomerschlaufe auf.

Kritisch bei der vorstehend beschriebenen kardanisch elastischen Aufhängung ist wie bei allen anderen ähnlichen Aufhängungen die dynamische Zugbelastung der auf unterschiedlichste Weise am Träger, also am Fahrzeugboden, gehalterten Elastomerschlaufe. Dies bewirkt ebenso wie die notwendigerweise recht knappe Dimensionierung des Elastomergelenks Probleme bei den gestiegenen Anforderungen an die wartungsfreie Lebensdauer solcher Aufhängungen. Kritisch ist bei der aus dem Stand der Technik bekannten Aufhängung angesichts der immer wuchtiger gewordenen Abgasanlagen die weiche Federkennung solcher Schlaufenlager in allen drei orthogonalen Raumrichtungen.

Ausgehend von diesem Stand der Technik stellt sich der Erfindung das technische Problem, eine kardanisch elastische Aufhängung mit einer Elastomerfeder zwischen einem Trägeranschlußstück und einem Lastanschlußstück zur Verfügung zu stellen, das mit kleineren und je nach Anwendung genau dosierbaren Federwegen auskommt und auch bei Aufhängung schwerer und wuchtiger Abgasanlagen oder anderer schwingungsbeaufschlagter Bauteile deutlich verbesserte Daten für die Betriebsstandzeit aufweist.

Dieses technische Problem löst die Erfindung gemäß dem Hauptanspruch durch das für diese Aufhängungen konzeptionell neue Prinzip der Ausstattung solcher kardanisch gummielastischer Aufhängungen mit anisotropen Federkenndaten. In den Raumrichtungen, in denen eine hohe Federsteifigkeit nicht nur tolerierbar, sondern häufig auch ausgesprochen erforderlich ist, wird die kardanisch federnde Aufhängung mit einer hohen Federsteifigkeit und eng begrenzten Federwegen ausgestattet, während sie in den Raumrichtungen, in denen, meist auf nur kleinen Wegen, eine weiche Kennlinie erforderlich ist, diese selektiv durch entsprechende konstruktive Maßnahmen auch zur Verfügung gestellt wird.

Die weitere Ausgestaltung und die technische Realisierung dieses Grundkonzepts, das Gegenstand des Hauptanspruchs 1 ist, ist in den Merkmalen der Unteransprüche weiter ausgebildet.

Bei der Anwendung solcher kardanisch elastischer Aufhängungen zum Aufhängen von Abgasleitungen an Kraftfahrzeugen, insbesondere von schweren Anlagen, läßt sich auf diese Weise in allen drei orthogonalen Raumrichtungen ein grundverschiedenes System von Federkennungen einstellen.

Hinsichtlich dieser orthogonalen Raumrichtungen ist im Rahmen der vorliegenden Beschreibung auf die übliche Praxis der Koordinatenzuordnungen Bezug genommen, daß nämlich die x-Richtung der Längsrichtung bzw. der Fahrtrichtung des Kraftfahrzeugs parallel zur Fahrbahn, die y-Richtung der Richtung senkrecht zur y-Richtung, ebenfalls parallel zur Fahrbahn, und die z-Richtung der Richtung senkrecht zur x-y-Ebene zugeordnet sind.

Unter Verwendung dieser Terminologie ist es beispielsweise in der Kraftfahrzeugtechnik wünschenswert, den Strang einer unter dem Fahrzeugboden geführten Abgasanlage gegen Querkräfte mit der Hauptkomponente in y-Richtung möglichst steif abzufedern und den Abgasstrang mit möglichst geringen Freiwegtoleranzen gegen möglichst weiche Anschläge zu führen. Auch in der z-Richtung ist ein steifes Federn wünschenswert, um das Auftreten von Interferenzen oder Eigenschwingungen des schwingenden Abgasstrangs in dieser Richtung nicht entstehen zu lassen. Durch zu große Federwege der Abgasanlage in der z-Richtung werden nicht nur die Aufhängungen rasch überfordert, sondern wird vor allem der Fahrkomfort und die Fahrsicherheit durch ein schlagendes Schwingen der Abgasanlage beeinträchtigt. Neben der vergleichsweise großen Federsteifigkeit wird von den Kennlinien in z-Richtung auch ein Anschlagverhalten sinnvollerweise zur realisieren sein, das jedoch mit etwas größeren Freiwegen und im Anschlagbereich weicheren Kennlinien ausgebildet sein muß, um das Entstehen hörbarer Anschlaggeräusche der Abgasanlage bei Bodenwellenfahrt auszuschließen. In x-Richtung müssen dagegen beim Kraftfahrzeug die kurzen aber kräftigen Amplituden der längsaxialen Schwingungen der Abgasanlage möglichst weich abgefedert sein. Ein Konzept zum Realisieren dieser Zielvorgaben sieht nach einer Ausgestaltung der Erfindung vor, die als Tragfeder für die Aufhängung dienende Elastomerfeder in den drei Raumrichtungen unterschiedlich vorzuspannen. Bei Wahl eines vergleichsweise harten Elastomers zur Herstellung der Tragfeder wird es beispielsweise ausreichen, diese in y-Richtung vorzuspannen, in z-Richtung stärker zu dimensionieren als in x-Richtung und erforderlichenfalls auch nur in y-Richtung zusätzliche eng tolerierte Führungsanschläge vorzusehen. Bei dieser konzeptionellen Gestaltung weist naturgemäß die x-Richtung die weichesten Federkenndaten auf, liegt die Federhärte in z-Richtung im mittleren Bereich und liegen die Kenndaten in der y-Richtung aufgabengemäß und anwendungsgemäß im Bereich der größten in der Aufhängung verfügbaren Federkenndaten.

Für den Fall, daß die Seitenführung des Abgasstrangs von geringerer Bedeutung gegenüber einer Stabilisierung des Abgasstrangs gegen Schwingungen in z-Richtung ist, sind die vorstehend beschriebenen konzeptionellen Ansätze gedanklich lediglich um 90° in der z-y-Ebene zu drehen. Die Elastomerfeder wird also in z-Richtung unter eine hohe statische Vorspannung gesetzt, um den Arbeitsbereich der Feder möglichst hoch anzusetzen, in y-Richtung lediglich dimensionierend versteift, so daß man wiederum als Resultat die weichesten Federkennlinien in x-Richtung, also senkrecht zu den Versteifungsmaßnahmen, erhält.

Es ist einleuchtend, daß für eine sorgfältige und genaue Abstimmung praxistauglicher Aufhängungen in aller Regel die Elastomerfeder der Aufhängung sowohl in y-Richtung als auch in z-Richtung sowohl vorgespannt als auch mit federwegbegrenzenden Anschlägen ausgestattet sein wird. Das numerisch dimensionierende Maß dieser Versteifungen richtet sich dabei nach den für das Lager aufgabengemäß vorgegebenen richtungsabhängigen Federkennlinien und Federwegbegrenzungen, wobei bei der Abstimmung auf das zunächst resultierende Federverhalten in x-Richtung zu achten ist. Diese Einstellungen im einzelnen sind anwendungsbedingt und können bei Kenntnis der vorliegend offenbarten Konzeption vom Fachman ohne weiteres nachvollzogen werden.

Generell und konzeptionell sind die Federwegbegrenzungen grundsätzlich möglichst weich zu gestalten, um Anschlaggeräusche von vornherein zu unterbinden. In diesem Rahmen sollten die federwegbegrenzenden Anschläge in y-Richtung möglichst kurz und mit kleinen Toleranzen, dennoch aber weich anschlagend ausgebildet sein. Hier wird das Konzept vorzugsweise davon ausgehen, im Anschlagbereich einen definierten Festanschlag, also im wesentlichen einen Formschluß vorzusehen, der nach Überwindung einer relativ stark progressiven Elastomerfederung erreicht wird. Demgegenüber sind in z-Richtung weichere und noch unabgebrochen im Progressionsbereich liegende Kennlinien nicht nur wünschenswert, sondern den formschlüssigen Anschlägen unbedingt vorzuziehen.

Ein konkretes Ausführungsbeispiel zur Realisierung dieser konzeptionellen Merkmale der Erfindung sind im folgenden anhand der Erläuterung eines Ausführungsbeispiels in Verbindung mit den Zeichnungen näher erläutert. Es zeigen:
- Fig. 1: einen Schnitt in der z-y-Ebene einer zentralen Abgasanlagenaufhängung für Kraftfahrzeuge; und
- Fig. 2: das in Fig. 1 gezeigte Ausführungsbeispiel in Draufsicht aus der z-Richtung, also in der x-y-Ebene.

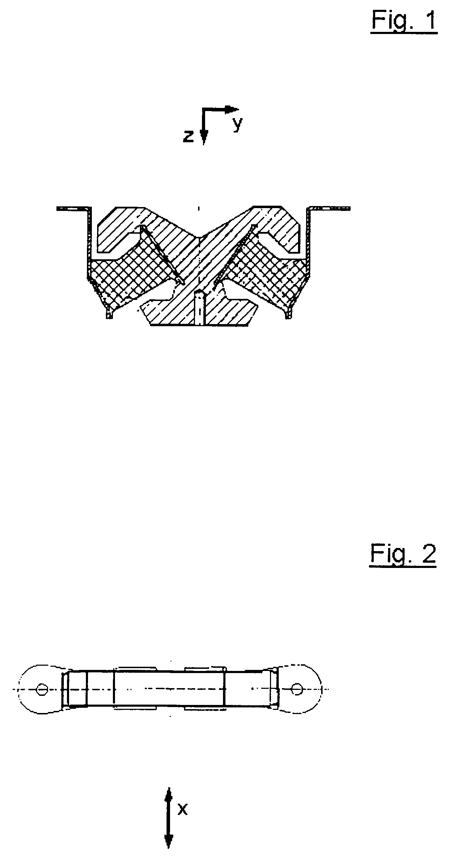

In den Figuren 1 und 2 ist ein Ausführungsbeispiel einer Aufhängung mit den Merkmalen der Erfindung gezeigt. Die kardanisch elastische Aufhängung für ein in den Figuren nicht dargestelltes schwingendes Bauteil, das an einem ebenfalls in den Figuren nicht dargestellten Träger, beispielsweise einem Fahrzeugboden, aufzuhängen ist, besteht aus einer Elastomerfeder 1, die ihrerseits aus den beiden Teilfederblöcken 1', 1" besteht, und die zwischen einem Trägeranschlußstück 2 und einem Lastanschlußstück 3 angeordnet ist. Das Trägeranschlußstück 2 weist Flansche 4 auf, die mit Bohrungen 5 versehen sind, so daß das Trägeranschlußstück 2 mit Schraubbolzen am Unterboden eines Kraftfahrzeugs oder an einem Unterbodenträger fest verschraubt werden können. Im montierten Zustand der Aufhängung definiert also die durch die trägerseitigen Oberflächen der Flansche 4 des Trägeranschlußstücks 2 definierte Ebene 6 gleichzeitig die Ebene des Fahrzeugbodens.

In der Darstellung der Fig. 1 ist die Aufhängung im montierten, aber vom Bauteil unbelasteten Zustand gezeigt. Im noch nicht montierten Zustand ist die trägerseitige Oberfläche des Lastanschlußstücks 3 durch die nicht vorgespannte Feder 1 über die Ebene 6 in z-Richtung hinausgehoben. Durch das Verschrauben der Aufhängung am Fahrzeugboden wird also die Elastomerfeder 1 vorgespannt, die einerseits an Schrägflächen 7 des Trägeranschlußstücks 2, die als Widerlager für die Feder dienen, abgestützt, und sind andererseits an Schrägflächen 8 abgestützt, die am Lastanschlußstück 3 so ausgebildet sind, daß sie den Widerlagerschrägflächen 7 in der in Fig. 1 gezeigten Weise im vormontierten und vorgespannten Zustand flächenparallel gegenüberstehen. Die Feder 1 erfährt dadurch eine erste Vorspannung, die in der ebenfalls aus Fig. 1 ersichtlichen Weise sowohl in z-Richtung als auch in y-Richtung erfolgt und sich letztendlich als Resultierende dieser beiden Vorspannungskomponenten darstellt.

Das Lastanschlußstück 3 weist auf seiner der Trägerseite gegenüberliegenden Anschlußseite 9 eine mit einem Innengewinde versehene Sacklochbohrung 10 auf, über die die aufzuhängende Abgasleitung mittels eines zentralen Verbindungsstück fest mit der eigentlichen kardanisch elastischen Aufhängung verschraubt werden kann. Bei ruhendem Fahrzeug bewirkt die Last der Abgasanlage durch ein weiteres Herabziehen des Lastanschlußstücks 3 in der in Fig. 1 gezeigten Vektorrichtung z eine weitere Vorspannung der Elastomerfeder 1 mit den Komponenten der Richtungen z und y. Dabei kann das einzustellende Vorspannungsverhältnis in der z-Richtung und in der y-Richtung sowohl durch die Konturierung der Elastomerfeder 1 als auch durch den Winkel eingestellt werden, mit der die Elastomerfederblöcke 1', 1" durch die Schrägflächen 7, 8 relativ zu der in z-Richtung liegenden Zentralachse der Aufhängung schräggestellt ausgebildet sind.

Durch das Vorspannen der Feder 1 in dem in den Figuren 1 und 2 gezeigten Ausführungsbeispiel in der z-Richtung und in der y-Richtung wird die Federkennlinie in der in Fig. 2 dargestellten x-Richtung relativ zu den Federkennlinien in z-Richtung und in y-Richtung deutlich weicher.

Durch diese Konfiguration wird die Elastomerfeder 1 der Aufhängung bei belastetem, insbesondere auch dynamisch belastetem Lastanschlußstück 3 nicht mehr auf Zug, sondern primär auf Druck belastet. Dadurch kann eine deutliche Erhöhung der Betriebsstandzeit bei verbesserter Tragfähigkeit der Aufhängung erreicht werden.

In der aus Fig. 1 ersichtlichen Weise weist das Lastanschlußstück 3 flanschartige Hörner 11 auf, die mehrere Funktionen gleichzeitig erfüllen. Zum einen dienen sie als ergänzendes Auflager zur Auflage an der Feder 1 über die Schrägfläche 8, zum anderen dienen ihre axial ausgerichteten Außenflächen 12 im Zusammenwirken mit der Innenwandfläche 13 des Trägeranschlußstücks 2 als formschlüssiger Festanschlag für eine stabile Seitenführung der Abgasanlage, beispielsweise bei Kurvenfahrt, und dienen gleichzeitig mit übermäßig starker Amplitude in z-Richtung als weicher, kraftschlüssiger Anschlag durch ein Aufsetzen der Unterfläche 14 auf der verformten Elastomerfeder 1. Dieser weiche, progressive, kraftschlüssige und der Federwegbegrenzung in z-Richtung dienende Anschlag begrenzt Kräfte und Federwege, die in der Richtung des in Fig. 1 gezeigten z-Vektors einwirken. In analoger Weise ist für die Rückschwingrichtung, ebenfalls in z-Richtung, vektoriell jedoch in der Fig. 1 nicht dargestellt, an der Unterseite des Lastanschlußstücks 3 ein Flansch 15 ausgebildet, der in ebenfalls weicher progressiver Weise zu einem kraftschlüssigen Anschlag in z-Richtung führt.

Schließlich dienen die Flanschhörner 11 des Lastanschlußstücks 3 auch der Sicherung der Aufhängung bei defekter oder zerstörter Elastomerfeder, da die größte Querabmessung des Lastanschlußstücks 3 an den Anschlagflächen 12 größer als die größte Öffnungsweite zwischen den Unterkanten 16', 16" des Trägeranschlußstücks 2 ist.

Nach einer in der Fig. 1 angedeuteten Weise können die beiden Teile des Trägeranschlußstücks 2, nämlich die Teile 2' und 2", auch unabhängig voneinander als Einzelteile gefertigt werden. Die Elastomerfeder kann dann beispielsweise mit einem Einknüpfblech versehen sein, das in entsprechende Ausnehmungen eingedrückt ist, die an der Schrägfläche 8 des Lastanschlußstücks 3 ausgebildet sind. Auf diese Weise kann die Aufhängung durch einfaches Austauschen der Lastanschlußstücke mit unterschiedlichen Abmessungen an die unterschiedlichen Geometrien von verschiedenen Anschlüssen im Fahrzeugboden modulartig angepaßt werden.

## Patentansprüche

1. Kardanisch elastische Aufhängung für ein schwingendes Bauteil an einem Träger, insbesondere Abgasanlagenaufhängung für Kraftfahrzeuge, mit einer Elastomerfeder zwischen einem Trägeranschlussstück und einem Lastanschlussstück für das Bauteil,
**gekennzeichnet** durch
anisotrope Federkenndaten.

2. Aufhängung nach Anspruch 1,
**gekennzeichnet** durch
eine grosse Federsteifigkeit in den Richtungen z und y sowie eine kleine, weichem Federverhalten entsprechende Federsteifigkeit in der x-Richtung, wobei die Richtungen x, y und z den orthogonalen Raumkoordinaten entsprechen und die Richtung z die Richtung der statischen Last des im Betriebszustand mit Komponenten in allen drei Raumrichtungen schwingenden Bauteils ist.

3. Aufhängung nach einem der Ansprüche 1 oder 2,
**gekennzeichnet** durch
eine Vorspannung der Elastomerfeder (1) in z-Richtung, oder in y-Richtung, oder sowohl in z-Richtung als auch in y-Richtung.

4. Aufhängung nach einem der Ansprüche 1 bis 3,
**gekennzeichne**t durch
weiche Anschläge (14,1 : 15,1; 12,13) als Federwegbegrenzer in z-Richtung, oder in y-Richtung, oder sowohl in z-Richtung als auch in y-Richtung.

5. Aufhängung nach einem der Ansprüche 1 bis 4,
**gekennzeichnet** durch
einen Hinterschnitt (16) des Trägeranschlussstücks (2) in z-Richtung gegenüber dem umgriffenen Lastanschlussstück (3).

6. Aufhängung nach einem der Ansprüche 1 bis 5,
**gekennzeichnet** durch,
eine Konstruktion der Aufhängung als Gummi-Metallteil mit brückenartiger Struktur (1"-3,11-1') bestehend aus einem Metallkern als Lastanschlussstück (3) und Brückenglied, das die lastaufnehmende Elastomerfeder (1), die in Gestalt von zwei Elastomerfederblöcken (1', 1") ausgebildet ist, aufliegend und flächig anliegend übergreift, wobei diese Elastomerfederblöcke ihrerseits jeweils auf zum Lastanschlussstück (3) hin geneigten Schrägflächen (7) des Trägeranschlussstücks (2) abgestützt sind.

7. Aufhängung nach einem der Ansprüche 1 bis 6,
**gekennzeichnet** durch,
Mittel (5) zum trägerseitigen Befestigen des Trägeranschlussstücks (2) am Träger und Mittel zum Befestigen (10) des Bauteils auf der der Trägerseite der Aufhängung gegenüberliegenden trägerabgewandten Seite des Lastanschlussstücks (3).

8. Aufhängung nach Anspruch 7,
**gekennzeichnet** durch,
einen Gewindebolzen oder eine Bohrung (10) mit Innengewinde als Mittel zum hängenden Befestigen des Bauteils an der trägerabgewandten Seite des Lastanschlussstücks (3).

9. Aufhängung nach einem der Ansprüche 1 bis 8,
**gekennzeichnet** durch,
eine Serie unterschiedlich dimensionierter und gegebenen Falls auch unterschiedlich konfigurierter Lastanschlussstücke (3) zur modularen Anpassung der Aufhängung an unterschiedliche Trägerkonfigurationen.

10. Verwendung der Aufhängung mit den Merkmalen nach einem der Ansprüche 1 bis 8 als zentrale Abgasanlagenaufhängung für Kraftfahrzeuge.
